# EUROPEAN PATENT APPLICATION

(11) **EP 4 266 233 A1**
(43) Date of publication of application: **25.10.2023**
(21) Application number: 23168359.0
(22) Date of filing: 18.04.2023
(51) Int. Cl.: G06Q 30/0601

(54) **METHOD OF PROVIDING CONTENT AND FEATURES FOR AN OBJECT**

(30) Priority: 20.04.2022 HK 32022052024
(71) Applicant: Lien, I-Chi Steven, Tsuen Wan (HK)
(72) Inventor: Lien, I-Chi Steven, Tsuen Wan (HK)
(74) Representative: Bewley, Ewan Stuart

(57) **Abstract**

The present invention discloses a method of providing content and features for an object, comprising of: preparing content and features platform (100), wherein the content comprises general content (101a) and personalized content (101b), and wherein the features platform comprises online and live virtual platform (101c), 3D graphic modelling (101d) and Metaverse (101e); generating quick response (QR) code and uniform resource locator (URL)(102); linking the QR code and URL with at least one of the prepared content and the features platform (104); encrypting the linked QR code and URL into cloud storage (106); creating unique key ID for corresponding to the QR code (108); and printing the QR code and URL on the object (110).

## Description

### FIELD OF THE INVENTION

The present invention relates to a method for providing content and features for an object, in particularly a method for providing content and features for an object by using QR code.

### BACKGROUND OF THE INVENTION

Quick Response (QR) code is a type of matrix barcode that can be read by a digital device or optical device. Said QR code may store various kinds of information as a series of pixels in a square-shaped grid. Therefore, QR codes are frequently used to track information about a product whereby users may easily use their smartphones that have built-in QR readers to read the QR codes. As such, all kinds of information can be easily and quickly accessible to anyone with a smartphone. Nowadays, QR codes are also widely used as an alternative way to make payments, connect to WIFI, or take one to a website.

The access of content via a barcode may be known in many different industries, such as the photography industry and the toy industry. For example, the integration of captured video into a photo album or a reading material in the form of barcodes. However, the content may be accessible by any person who has a digital device or optical device. This may be a lack of privacy for the content creator or content receiver. Besides, the insertion of captured video may have limited file size. Therefore, there is a need to have a method and system for providing personalized content or features and providing large file storage for insertion of captured video.

Besides, consumers may only be able to view limited information or details of a toy product on a packaging box. In due course, manufacturers now print a barcode on the packaging box to allow consumers to scan and view the details of the toy product. However, such detail information may only be limited to specifications, models and features. Hence, there is a need to have more comprehensive product details to be disclosed to attract consumers to purchase a toy, in particular a virtual platform for viewing the represented toy.

In another example, the toys in the market may have limited colours or decorations. The manufacturer may limit the production of different types of colours, decorations, or accessories due to limited demand from the consumers. These may cause consumers unable to purchase their preferred colours, decorations, or accessories for a toy. Therefore, there is a need to have an easy and simple method for consumers to purchase a customised toy on an online platform.

United States Patent No. 20130292462 A1 discloses a system and method for providing access to audio-visual (AV) content, such as music or video clips wherein provide an openly accessible code on an item or packaging associated with the item and a second code associated with the same item or packaging. Said first code and second code can be quick-response code or other scannable code or a string of alphanumeric characters. The access of content can be provided when the first code or second code is scanned or entered using a device such as computer, smartphone, or table computer. The first code is only providing a sample of the AV content to the user, wherein the second code is only providing one or limited number of times access to the user. This may not provide a good purchasing experience for the users as there is only sample AV content being disclosed before purchase and limited access after purchase. Hence, there is a need to have a system and method that provides unlimited full access of content to attract consumers to purchase the product.

United States Patent No. 20090191531 A1 discloses a method and apparatus for synchronization of sensory stimulation, such as audio, video, touch, smell and/or taste with the reading experience. Said read experience include books, magazines, textbooks, telephone directories, maps, resumes, brochures, newspapers, or other form of written or printed materials. Other forms of interaction such as interactive games or interactive tests also can be provided. One or more RFID chips are embedded in certain pages of a book to provide the sensory stimulation. Therefore, the usage of RDID in the patent may require higher cost and complicated use, in comparison with code systems. Hence, there is a need to provide a low-cost and simple method and system of providing access to content on a reading material or toys.

United States Patent No. 8,808,053 B2 discloses a system and method for toy adoption and marketing. Said system and method provides a virtual world presentation to a user for entertainment wherein the virtual world includes a virtual toy representing the toy. The method for providing a virtual world presentation to a user of a toy for entertainment comprising the steps of a user obtaining the toy including a corresponding registration code; serving content, via communication network; registering the toy for allowing access to a restricted portion; and the system providing virtual world data for including in the content. Although the toys are possible to be sold to user via an online merchant, but the selection of the toys are only limited to the certain choices. Hence, there is a need to have a customised purchase online platform wherein consumer could customise a toy based on preferred colours or addition of accessories.

### SUMMARY OF THE INVENTION

It is an objective of the present invention to provide improved method and system of providing content and/or features platform via a quick response code.

It is also an objective of the present invention to provide improved method and system of providing content in a large file storage such as cloud storage.

Accordingly, these objectives may be achieved by following the teachings of the present invention. The present invention relates to a method of providing content and features for an object, comprising of: preparing content and features platform, wherein the content comprises general content and personalized content, and wherein the features platform comprises online and live virtual platform, 3D graphic modelling and Metaverse; generating quick response (QR) code and uniform resource locator (URL); linking the QR code and URL with at least one of the prepared content and the features platform; encrypting the linked QR code and URL into cloud storage; creating unique key ID for corresponding to the QR code; and printing the QR code and URL on the object.

### BRIEF DESCRIPTION OF THE DRAWINGS

The features of the invention will be more readily understood and appreciated from the following detailed description when read in conjunction with the accompanying drawings of the preferred embodiment of the present invention, in which:
FIG. 1 illustrates a flowchart on the method of providing content and features for an object;
FIG. 2 illustrates a flowchart on the types of contents and features platform in FIG. 1;
FIG. 3 illustrates a diagram of the system for providing content and features for an object;
FIG. 4 illustrates an example method of retrieving personalized content for an object;
FIG. 5 illustrates an example method of accessing general content and features platform.

### DETAILED DESCRIPTION OF THE PREFERRED EMBODIMENT

For the purposes of promoting and understanding of the principles of the invention, reference will now be made to the embodiments illustrated in the drawings and described in the following written specification. It is understood that the present invention includes any alterations and modifications to the illustrated embodiments and includes further applications of the principles of the invention as would normally occur to one skilled in the art to which the invention pertains.

The present invention teaches a method of providing content and features for an object, comprising of: preparing content and features platform **100,** wherein the content comprises general content **101a** and personalized content **101b,** and wherein the features platform comprises online and live virtual platform **101c,** 3D graphic modelling **101d** and Metaverse **101e;** generating quick response (QR) code and uniform resource locator (URL) **102;** linking the QR code and URL with at least one of the prepared content and the features platform **104;** encrypting the linked QR code and URL into cloud storage **106;** creating unique key ID for corresponding to the QR code **108;** and printing the QR code and URL on the object **110.**

In a preferred embodiment of the present invention, the object comprises commodity wherein the commodity comprises photo album, gifting card, toy, kitchenware and antique.

In a preferred embodiment of the present invention, the general content **101a** is prepared **100** by a retailer to a user. The general content **101a** comprises object information such as specification, history, record, manufacturer's information and recipe.

In a preferred embodiment of the present invention, the personalized content **101b** is prepared **100** by a content creator to a specific content receiver. The personalized content **101b** comprises audio and video.

In a preferred embodiment of the present invention, the features platform is prepared **100** by a retailer to a user.

In a preferred embodiment of the present invention, the online and live virtual platform **101c** comprises live showcasing a real object on an event, race, competition, and video commercials. The 3D graphic modelling **101d** comprises showcasing the physical object in 3D graphic wherein the 3D graphic modelling **101d** of the feature platform further comprising the step of allowing user to customize the physical object by changing the colour and sticker on the object. The customized object is deployed for commoditisation. The metaverse **101e** comprises buy, host and build one's own race or competition tracking in Metaverse **101e.**

In a preferred embodiment of the present invention, the unique key ID is created **108** by retailer or content creator for allowing user or content receiver respectively to access the content or features platform. Said unique key ID is provided together along with the object.

In a preferred embodiment of the present invention, the QR code and URL are optional to be printed on a physical items such as paper and stickers.

The present invention also teaches a system of providing content and features for an object, comprising of: a memory **112** to store content and features platform, wherein the content comprises general content **101a** and personalized content **101b,** and wherein the features platform comprises online and live virtual platform **101c,** 3D graphic modelling **101d** and Metaverse **101e;** a processing unit **114** configured to: generate quick response (QR) code and uniform resource locator (URL) **102;** link the QR code and URL with at least one of the prepared content and the features platform **104;** encrypt the linked QR code and URL into cloud storage **106;** create unique key ID for corresponding to the QR code **108;** and a printing unit **116** configured to print the QR code and URL on the object **110.**

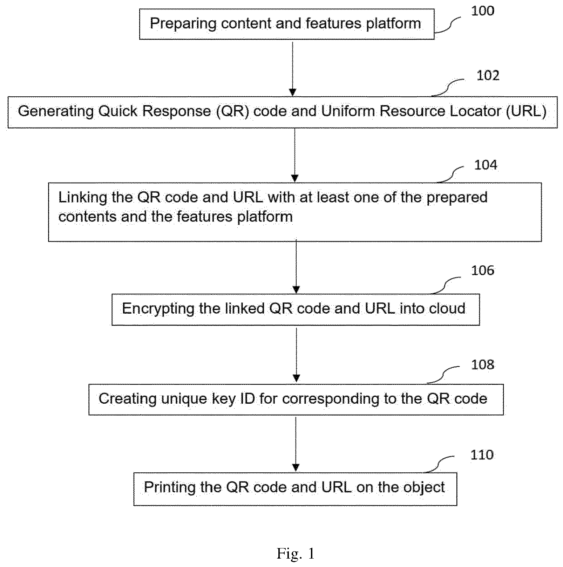

A flowchart on the method of providing content and features for an object is illustrated in **FIG. 1****.** The method as illustrated in **FIG. 1** comprises preparing content and features platform **100;** generating QR code and URL **102;** linking the QR code and URL with at least one of the prepared contents and the features platform **104;** encrypting the linked QR code and URL into cloud storage **106;** creating unique key ID for corresponding to the QR code **108;** and printing the QR code and URL on the object **110.** The object comprises commodity wherein the commodity includes but not limited to photo album, gifting card, toy, kitchenware and antique. The unique key ID which corresponding to the QR code is created **108** by retailer or content creator for allowing user and content receiver to access the content or features platform. The unique key ID is provided together along with the object such as on the packaging box.

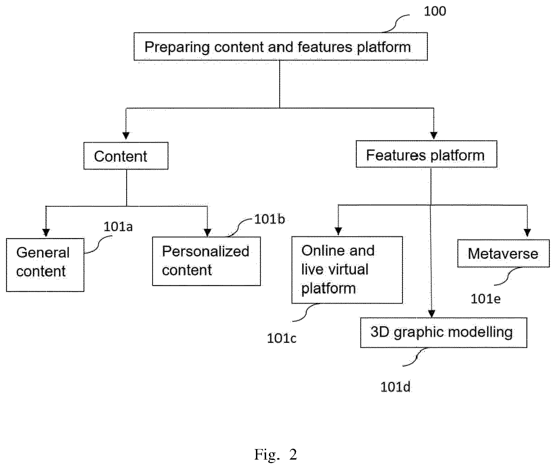

As illustrated in **FIG. 2****,** the content comprises general content **101a** and personalized content **101b.** The general content **101a** is prepared **100** by a retailer or manufacturer to a user wherein said general content **101a** include but not limited to object information such as specification, history, record, manufacturer's information and recipe. For example, a kitchenware printed with QR code allows user to view the specifications and cooking recipes as well as manufacturer's company information and link to its company website. In another example, user may scan the QR code on an antique to view the history and record. The personalized content **101b** is prepared **100** by a content creator to a specific content receiver wherein said personalized content **101b** include but not limited to audio and video.

The features platform as illustrated in **FIG. 2** comprises online and live virtual platform **101c,** 3D graphic modelling **101d** and Metaverse **101e.** Accordingly, the features platform is prepared **100** by a retailer or manufacturer to a user. The online and live virtual platform **101c** comprises live showcasing a real object on an event, race, competition and video commercials. The 3D graphic modelling **101d** comprises showcasing the physical object in 3D graphic. In further of the said 3D graphic modelling **101d** comprising the step of allowing user to customize the physical object by changing the colour, sticker, accessories and decorations on the object. Said customized object is deployed for commoditisation. The Metaverse **101e** comprises buy, host and build one's own race or competition tracking in Metaverse **101e.** Therefore, user or content receiver could access the content or features platform by key in the unique key ID provided on the packaging box.

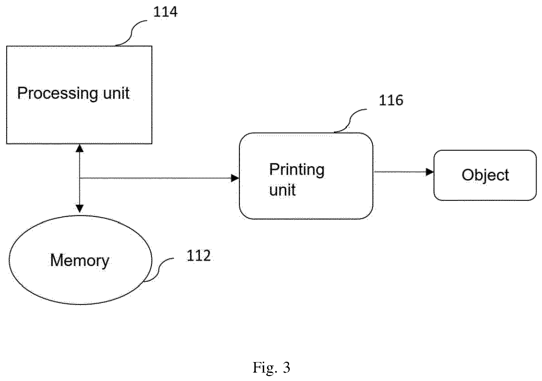

A system of providing content and features platform for an object is illustrated in **FIG. 3****.** A processing unit **114** is coupled to a memory **112** that store content and features platform. Said processing unit **114** configured to generate QR code and URL **102,** link the QR code and URL with at least one of the prepared content and the features platform **104;** encrypt the linked QR code and URL into cloud storage **106,** and create unique key ID for corresponding to the QR code **108.** A printing unit **116** is further coupled to the the system for printing the QR code and URL on the object **110.**

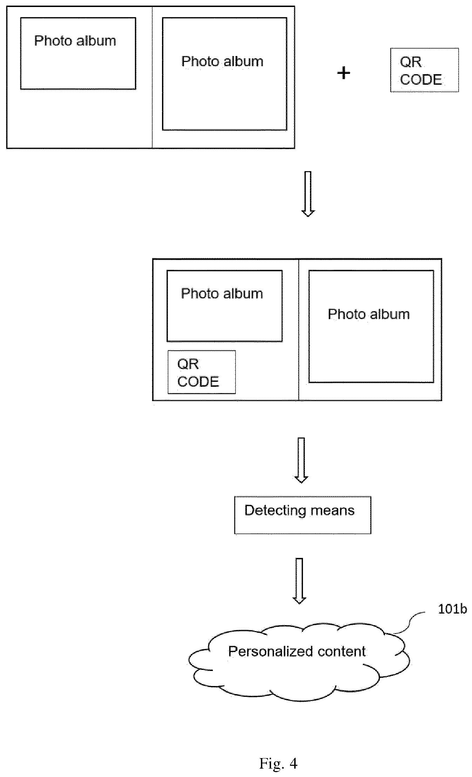

An example method of retrieving personalized content **101b** for a photo album is shown in **FIG. 4****.** A personalized content **101b** such as video and/or audio is recorded by a content creator. A QR code and URL is generated **102** and linked with the video and/or audio **104.** The linked QR code and URL is encrypted into cloud storage **106.** Afterwards, an unique key ID is created **108** by the content creator for corresponding to the QR code wherein the unique key ID is provided together along with the photo album. The unique key ID comprises password. Subsequently, the QR code is printed on the photo album **110** as illustrated in **FIG. 4****.** The content receiver may use any detecting means such as mobile phone with built-in QR code reader to scan the QR code on the photo album. The content receiver will be directed to a content link wherein the password is required to be key in for accessing the personalized video and/or audio **101b.**

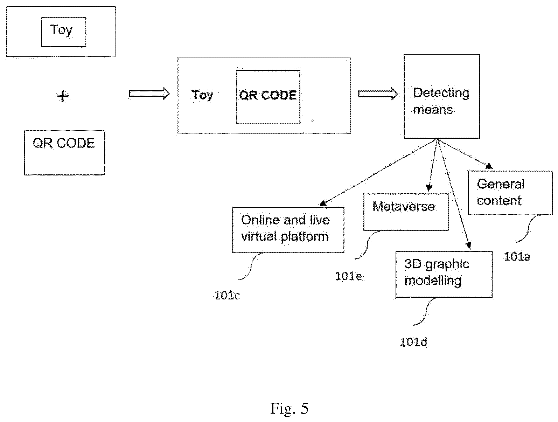

Another example method of retriving content and accessing features platforms for a toy is shown in **FIG. 5****.** A general content **101a** comprises information of the toy such as specification, history and record of the toy is prepared **100** by a retailer or manufacturer. Then, a QR code and URL is generated **102** and linked with the prepared general content **101a** and a features platform **104.** The linked QR code and URL is encrypted into cloud storage **106.** An unique key ID is created **108** by the retailer or manufacturer for corresponding to the QR code wherein the unique key ID is provided together along inside the toy box packaging. The unique key ID comprises password. Hence, user or consumer will only be able to obtain the password after purchased and unbox the toy. Subsequently, the QR code is printed on the toy **110** as illustrated in **FIG. 5****.** The user or consumer may use any detecting means such as mobile phone with built-in QR code reader to scan the QR code on the purchased toy. The user or consumer will be directed to a content link wherein the password is required to be key in for accessing the general content **101a** and features platform. Said features platform comprises online and live virtual platform **101c,** Metaverse **101e** and 3D graphic modelling **101d.**

The present invention provides significantly improved method and system of providing content and/or features platform via a QR code, through encryption into cloud storage **106.** Said cloud storage could provide large file storage for a content creator, retailer or manufacturer. For example, the content creator of photo album is beneficial to store a bundle of photos or videos shooting, post editing and production of hard copy in anytime. Besides, a variety number of photos, length of videos and/or audio could be stored in the cloud storage too.

The present invention provides low cost and simple method and system of providing content and/or features platform. This is because the usage of QR code is low cost and user-friendly. Besides, the present invention could provide both general content **101a** and/or personalized content **101b** to a user or content receiver. A password is required to access the content and therefore it is highly private and creating good marketing strategy. For example, a personalized video **101b** created by a content creator is only accessible by the content receiver who having the password. In another example, the password of the toy is provided inside the packing box and therefore, use or consumer must purchase the toy to access the online and live virtual platform **101c,** Metaverse **101e** and 3D graphic modelling **101d.** The user or consumer may unlimited access the full features such as live showcasing a real car on the road, race and video commercials; physical object in 3D graphic; and linking the purchased toy to metaverse. In addition, user may scan the QR code on the toy to the 3D toy website wherein a customized toy can be created. Said customized toy can be purchased by the user.

The present invention explained above is not limited to the aforementioned embodiment and drawings, and it will be obvious to those having an ordinary skill in the art of the prevent invention that various replacements, deformations, and changes may be made without departing from the scope of the invention.

## Claims

1. A method of providing content and features for an object, comprising of:
preparing content and features platform (100),
wherein the content comprises general content (101a) and personalized content (101b), and
wherein the features platform comprises online and live virtual platform (101c), 3D graphic modelling (101d) and Metaverse (101e);
generating quick response (QR) code and uniform resource locator (URL) (102);
linking the QR code and URL with at least one of the prepared content and the features platform (104);
encrypting the linked QR code and URL into cloud storage (106);
creating unique key ID for corresponding to the QR code (108); and
printing the QR code and URL on the object (110).

2. The method according to claim 1, wherein the general content (101a) comprises object information such as specification, history, record, manufacturer's information and recipe.

3. The method according to claim 1, wherein the personalized content (101b) is prepared (100) by a content creator to a specific content receiver; wherein the personalized content (101b) comprises audio and video.

4. The method according to claim 1, wherein the 3D graphic modelling (101d) comprises showcasing the physical object in 3D graphic.

5. The method according to claim 1, wherein the 3D graphic modelling (101d) of the feature platform further comprising the step of allowing user to customize the physical object by changing the colour and sticker on the object.

6. The method according to claim 1, wherein the metaverse (101e) comprises buy, host and build one's own race or competition tracking in Metaverse (101e).

7. The method according to claim 1, wherein the unique key ID is created (108) by retailer or content creator for allowing user or content receiver respectively to access the content or features platform.

8. The method according to claim 1, wherein the unique key ID is provided together along with the object.

9. A system of providing content and features for an object, comprising of: a memory (112) to store content and features platform,
wherein the content comprises general content (101a) and personalized content (101b), and
wherein the features platform comprises online and live virtual platform (101c), 3D graphic modelling (101d) and Metaverse (101e);
a processing unit (114) configured to:
generate quick response (QR) code and uniform resource locator (URL) (102);
link the QR code and URL with at least one of the prepared content and the features platform (104);
encrypt the linked QR code and URL into cloud storage (106);
create unique key ID for corresponding to the QR code (108); and
a printing unit (116) configured to print the QR code and URL on the object (110).

10. The system according to claim 9, wherein the object comprises commodity comprising photo album, gifting card, toy, kitchenware and antique

11. The system according to claim 9, wherein the personalized content (101b) comprises audio and video prepared by a content creator to a specific content receiver.

12. The system according to claim 9, wherein the online and live virtual platform (101c) comprises live showcasing a real object on an event, race, competition and video commercials.

13. The system according to claim 9, wherein the 3D graphic modelling (101d) comprises showcasing the physical object in 3D graphic; wherein the 3D graphic modelling (101d) of the feature platform further comprises the step of allowing user to customize the physical object by changing the colour and sticker on the object; wherein the customized object is deployed for commoditisation.

14. The method according to claim 9, wherein the metaverse (101e) comprises buy, host and build one's own race or competition tracking in Metaverse (101e).

15. The method according to claim 9, wherein the unique key ID is created (108) by retailer or content creator for allowing user or content receiver respectively to access the content or features platform; wherein the unique key ID is provided together along with the object.
